# EUROPEAN PATENT SPECIFICATION

(11) **EP 1 210 236 B1**
(45) Date of publication and mention of the grant of the patent: **30.06.2004**
(21) Application number: 00917521.7
(22) Date of filing: 19.04.2000
(51) Int. Cl.: B60G 17/02, B60G 11/00, B60G 21/04, B60G 21/055

(54) **VEHICLE SUSPENSION SYSTEM, PARTICULARLY FOR ROAD AND OFF-ROAD VEHICLES**
FAHRZEUGAUFHÄNGUNGSSYSTEM, INSBESONDERE FÜR STRASSEN UND GELÄNDEFAHRZEUGE
SYSTEME DE SUSPENSION AUTOMOBILE, EN PARTICULIER POUR VEHICULES ROUTIERS ET TOUT TERRAIN

(30) Priority: 12.07.1999 PL 33433199
(43) Date of publication of application: 05.06.2002
(73) Proprietor: Oledzki, Wieslaw Julian, 15-427 Bialystok (PL); Szkola Glowna Gospodarstwa Wiejskiego, Warsaw, 02-787 (PL)
(72) Inventor: Oledzki, Wieslaw Julian, 15-427 Bialystok (PL)
(74) Representative: Grünecker, Kinkeldey, Stockmair & Schwanhäusser Anwaltssozietät
(86) International application number: PCT/PL2000/000030
(87) International publication number: WO 2001/003958

(56) References cited:
- WO-A-94/11650
- WO-A-96/11815
- US-A- 1 991 911
- US-A- 3 157 394
- US-A- 3 460 852

## Description

The present invention relates to a vehicle suspension system, particularly for road and off-road vehicles, such as trucks, buses and military vehicles, including tanks, and first of all for those vehicles whose weight and dynamical loads vary within a broad range during the operating process.

The main function of vehicle suspension is to reduce vibrations transferred to a vehicle body by vehicle wheels. The suspension is a set of elements connecting the vehicle wheels with the vehicle frame or body. Suspensions of automotive vehicles are fitted with steel springs such as leaf springs, coil- springs, torsion bars, as well as solid rubber elements and pneumatic springs and hydro-pneumatic elements.

Leaf springs are made of elastic steel flat bars. The leaf spring, supported in the middle and loaded on both ends, is subject to deformation and simultaneously works against the forces of elasticity.

Coil springs are made of steel spring wire. They are lighter and easier to assemble than leaf springs but unable to transfer side forces, hence additional elements are necessary to hold the vehicle axle.

Torsion bars are steel springs made in the form of rod, tube or flat bar pack, one end of which is anchored e.g. in a vehicle frame while the other one is twisted by an arm of a vehicle wheel.

Pneumatic springs are built in the form of two or three-fold bellow manufactured of synthetic rubber reinforced with cord plait and tightened in metallic holders. Pneumatic springs work utilizing pressure of compressed air contained therein. They are used in buses and trucks as well as in off road vehicles. There are also hydro-pneumatic suspensions, in which the elastic medium is a compressed gas contained in a chamber.

Further compression of the gas results from the action of a piston, which follows the movement of a vehicle wheel.

The spring rate of steel springs is, in general, constant. Thus the damping characteristic of most prior-art vehicle suspension systems using such a spring is linear or nearly linear, which is their major disadvantage. Some of steel springs, e.g. coil springs, can be. made progressive, however damping characteristic of vehicle suspension using such springs cannot be freely shaped and remains remarkably inferior to that of the air spring.

Some unconventional vehicle suspension systems providing non-linear damping characteristic and means for adjusting it are known from prior art. For example the International Publication WO-A-96 11815 of the International Application PCT/CA 95/00570 discloses a suspension system, in which the suspension arm rotates roller carriers, the rollers contained therein follows cam surfaces, which in turn force a spring supports to move axially and to compress the spring. The US patent No. 3,157,394 granted to Mr. O. K. Kelley in 1964 provides another example of suspension with a cam mechanism, a number of in turn actuated Belleville springs and non-linear non-differentiable characteristic. However non-linearity of damping characteristic of these suspensions is achieved by engaging springs through a cam mechanism, and means for adjusting the characteristic are shape of the cam, its position relative other elements of the suspension mechanism and nuts to regulate the initial length of the spring. Consequently, these suspensions are exceedingly complicated, of questionable durability and reliability, unable to cope with large loads, and means for adjusting damping characteristic of them are completely unsatisfactory.

A vehicle suspension, according to the present invention, is a purely mechanical device. Non-linearity of its damping characteristic and means for adjusting it to specific requirements is derived directly from the kinetic of the four bar mechanism. It contains no foreign ad hoc incorporated parts e.g. cams and features a compact and robust structure. In fact the structure of the mechanism of the suspension according to the present invention is the strongest possible as its moving parts occupy the whole internal space of its body. Thus it can cope with large loads and the capacity/weight ratio would be better than that of all kinds of known suspensions. It uses only standard springs, while it provides a damping characteristic, which betters that of hydro-pneumatic suspensions. Moreover the construction of the suspension, according to the invention, enables its characteristic to be freely chosen through the choice of the geometric parameters of the mechanisms comprised therein.

The manufacturing technology of the suspension according to the invention is simple and inexpensive. Moreover, the suspension provides the possibility of the relative position between elements connecting the suspension unit with vehicle wheels and a spring to be freely adjusted.

The invention solves the problem of constructing a vehicle suspension of non-linear characteristic using springs of linear characteristic. By non-linear characteristic is meant non-linear and differentiate dependence of suspension stiffness on vehicle axle flex.

The object of the invention is to provide a new type of-vehicle suspension system destined for new vehicles, particularly for road and off-road ones, which also can be assembled in existing vehicles during overhauls, e.g. in tanks, and which improves substantially the shock absorption within the whole range of dynamical loads and vehicle weight variations.

The essence of the vehicle suspension system, according to the present invention, is that it comprises at least one flat or spatial four-link mechanism, three kinematic pairs of which are rotational ones, while the fourth one is either a rotational or a sliding one; and the two links of said mechanism are made in the form of eccentric and one link is made in the form of eccentric or slider, wherein one link of said mechanism is coupled with a vehicle wheel, another link of the mechanism is coupled with a spring, and the whole mechanism is fastened to a vehicle frame through yet another link, to obtain a non-linear dependence of deformation of the spring on an axle flex.

A good result is obtained when said suspension system, as four links of its mechanism, comprises a shaft fitted with an eccentric which is coupled rotationally with an intermediate eccentric; the latter being coupled rotationally with a disc, while the shaft and the disc pivot directly in a mechanism body. The body is fastened to a vehicle frame. The shaft, in turn, is coupled rigidly with a vehicle wheel arm, and the disc is coupled with one end of a spring, the other end of which is fastened to the body of the mechanism or directly to the vehicle frame. In this arrangement, the axes of rotation of all the kinematic pairs of the suspension mechanism are parallel to each other.

A good result is also obtained when the suspension system, as its four links, comprises a shaft fitted with an eccentric which is coupled rotationally with an intermediate eccentric which, in turn, is coupled rotationally with a disc, while the shaft and the disc pivot directly in a mechanism body, the latter being fastened to a vehicle frame. Besides, the disc is coupled rigidly with a vehicle wheel arm, and the shaft is coupled with one end of a spring the other end of which is fastened to the body or directly to the vehicle frame. In this arrangement the axes of rotation of all the kinematic pairs of the suspension mechanism are parallel to each other.

A good result is also obtained when the suspension system comprises a shaft fitted with a flange and an eccentric, the latter being coupled rotationally with an intermediate eccentric which, in turn, is coupled rotationally with a disc, while the shaft and the disc pivot directly in a mechanism body. The shaft is fastened to a vehicle frame with the help of the flange, while the intermediate eccentric is coupled rigidly with a vehicle wheel arm, and the body is coupled rigidly with one end of a spring the other end of which is fastened to the shaft or directly to the vehicle frame.

In this arrangement the axes of rotation of all the kinematic pairs of the suspension mechanism are parallel to each other.

A good result is also obtained when the suspension system comprises two flat four-link mechanisms and a steel spring in the form of U-shaped torsion bar, wherein each mechanism, as its four links, comprises a shaft fitted with an eccentric which is coupled rotationally with an intermediate eccentric, the latter in turn being coupled rotationally with a disc, whereas the shaft and the disc pivot directly in a mechanism body.

The body of each mechanism is fastened to a vehicle frame, and the shaft is coupled rigidly with a vehicle wheel arm, while the intermediate eccentric is coupled with one end of the U-shaped torsion bar the other end of which is fastened to the intermediate eccentric of the analogous mechanism of the suspension of the other wheel.

In this arrangement the axes of rotation of all the kinematic pairs of each suspension mechanism are parallel to each other.

A good result is also obtained when the suspension system, as four links of its mechanism, comprises a shaft fitted with an eccentric which is coupled rotationally with an intermediate eccentric, the latter in turn being coupled rotationally with a disc, whereas the shaft and the disc pivot directly in a mechanism body. The body is fastened to a vehicle frame and the shaft is coupled rigidly with a vehicle wheel arm, while the disc is coupled with one end of a spring the other end of which is fastened to the mechanism body or directly to the vehicle frame.

The suspension is in accordance with the invention provided that the axes of rotation of all the kinematic pairs of the suspension mechanism intersect at a precisely one point P.

A good result is also obtained when the suspension system, as four links of its mechanism, comprises a shaft fitted with an eccentric which is coupled rotationally with an intermediate eccentric which, in turn, is coupled rotationally with a disc. The shaft and the disc pivot directly in a mechanism body, which is fastened to a vehicle frame.

Besides, the disc is coupled rigidly with a vehicle wheel arm, and the shaft is coupled with one end of a spring the other one of which is fastened to the mechanism body or directly to the vehicle frame.

The suspension is in accordance with the invention provided the axes of rotation of all the kinematic pairs of said suspension mechanism intersect at a precisely one point P.

A good result is also obtained when the suspension system, according to the invention, comprises a shaft fitted with a flange and an eccentric, which is coupled rotationally with an intermediate eccentric, which in turn is coupled rotationally with a disc. The shaft is fastened to a vehicle frame with the help of the flange whereas the intermediate eccentric is coupled rigidly with a vehicle wheel arm. The mechanism's body is coupled rigidly with one end of a spring the other end of which is fastened to the shaft or directly to the vehicle frame.

The suspension is in accordance with the invention provided the axes of rotation of all the kinematic pairs of said suspension mechanism intersect at a precisely one point P.

A good result is also obtained when the suspension system, according to the invention, comprises two four-link spatial mechanisms and a spring in the form of U-shaped torsion bar, whereas each mechanism, as its four links, comprises a shaft fitted with an eccentric which is coupled rotationally with an intermediate eccentric, the latter, in turn, is coupled rotationally with a disc, whereas the shaft and the disc pivot directly in a body. Additionally, the body of each mechanism is fastened to a vehicle frame, and the shaft is coupled with a vehicle wheel arm, while the intermediate eccentric is coupled with one end of the U-shaped torsion bar the other end of which is fastened to the intermediate eccentric of the analogous mechanism of the suspension of the other wheel.

The suspension is in accordance with the invention provided that the axes of rotation of all the kinematic pairs of each of the suspension mechanisms intersect at a precisely one point P.

A good result is also obtained when the suspension system, according to the invention, comprises a shaft fitted with three eccentrics which are coupled rotationally with corresponding intermediate eccentrics which, in turn, are coupled rotationally with corresponding sliders, whereas the shaft pivots directly in a body and the sliders are sliding fitted in the mechanism body, whereas one of the sliders is coupled with a vehicle axle while the two others are coupled with a spring, the latter being fastened to a vehicle frame. The body is fastened to the vehicle frame.

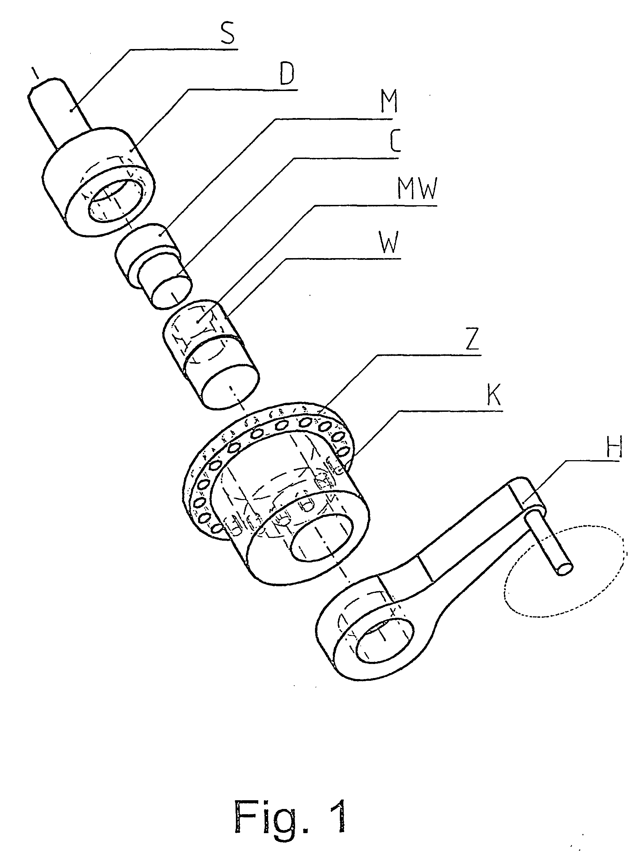

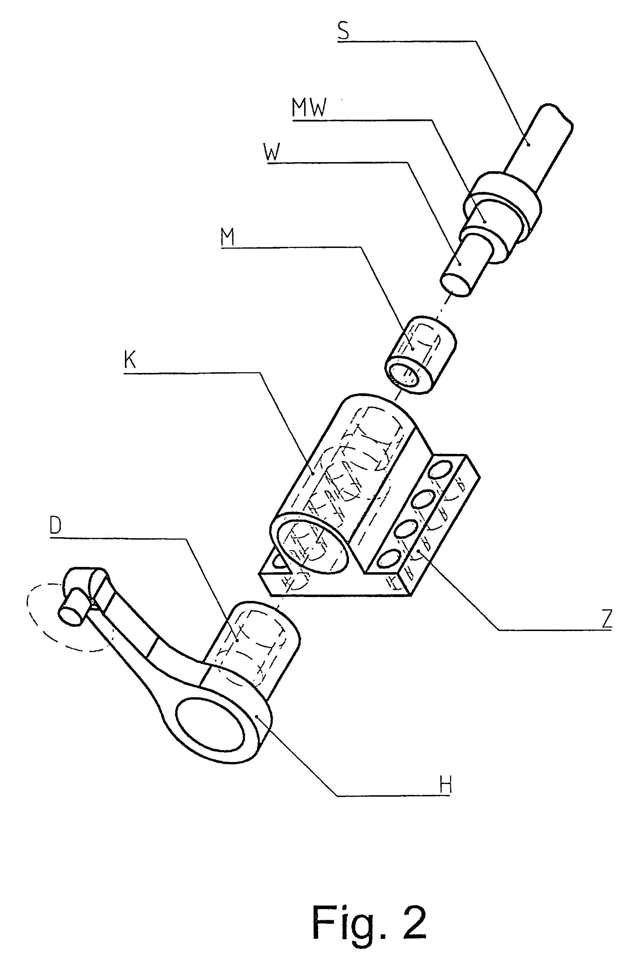

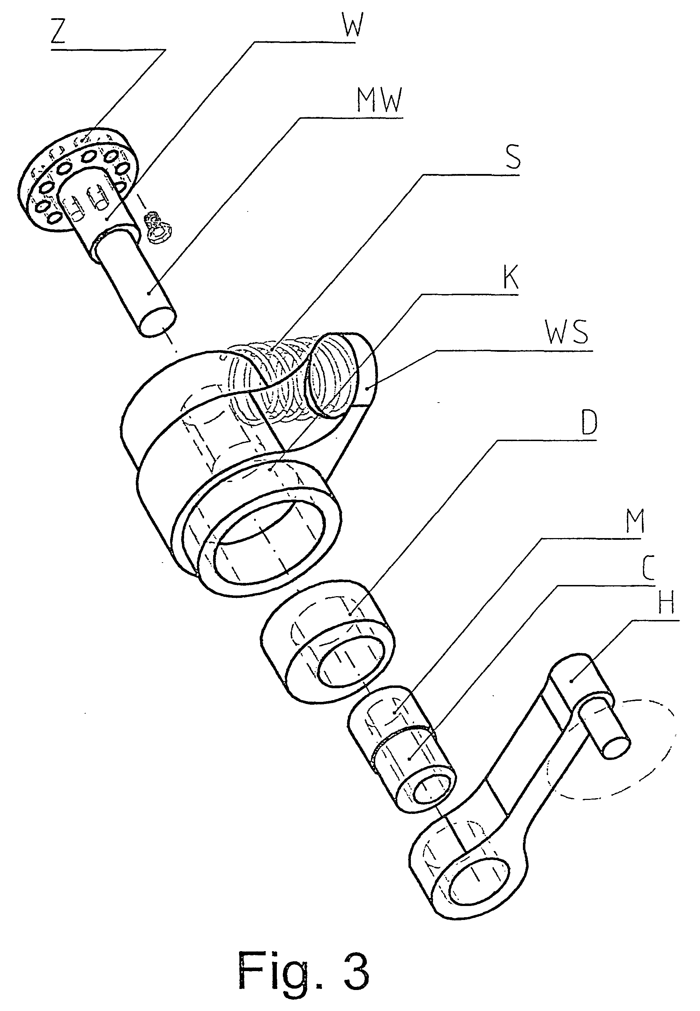

The object of the invention is shown in the accompanying drawings, whereFig. 1 shows a vehicle suspension system provided with a torsion bar, intended for fastening to a vehicle frame with the help of a mechanism body, and the suspension mechanism shaft coupled with a vehicle wheel arm; Fig. 2 shows a vehicle suspension system provided with a torsion bar and a disc coupled with a wheel arm, which is fit for fastening to a vehicle body with the help of a mechanism body; Fig. 3 shows a vehicle suspension system provided with a coil spring and an intermediate eccentric coupled with a vehicle wheel arm, which is fit for fastening to a vehicle body through the shaft equipped with a flange;

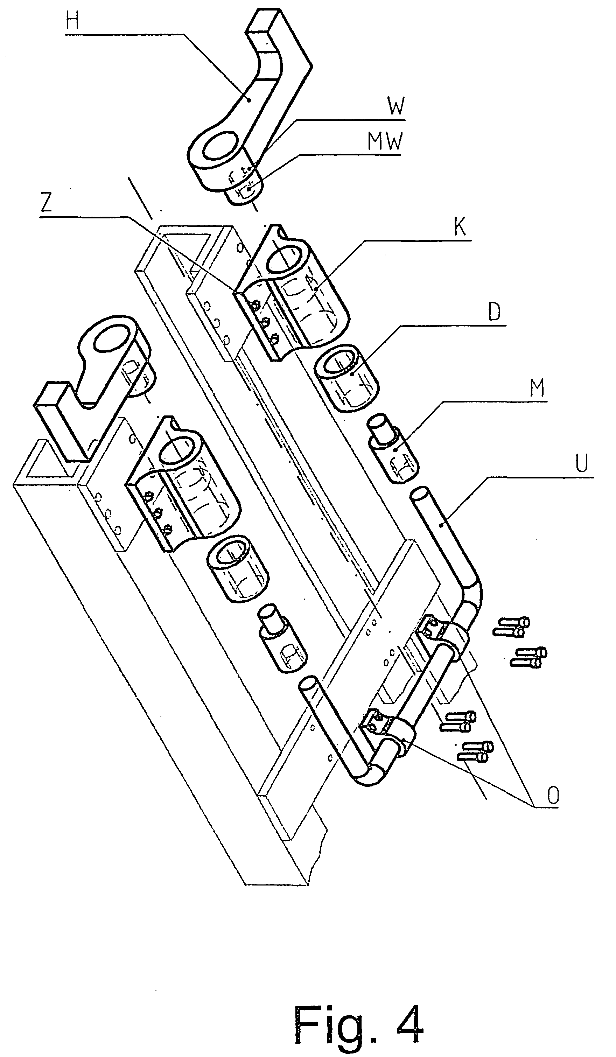

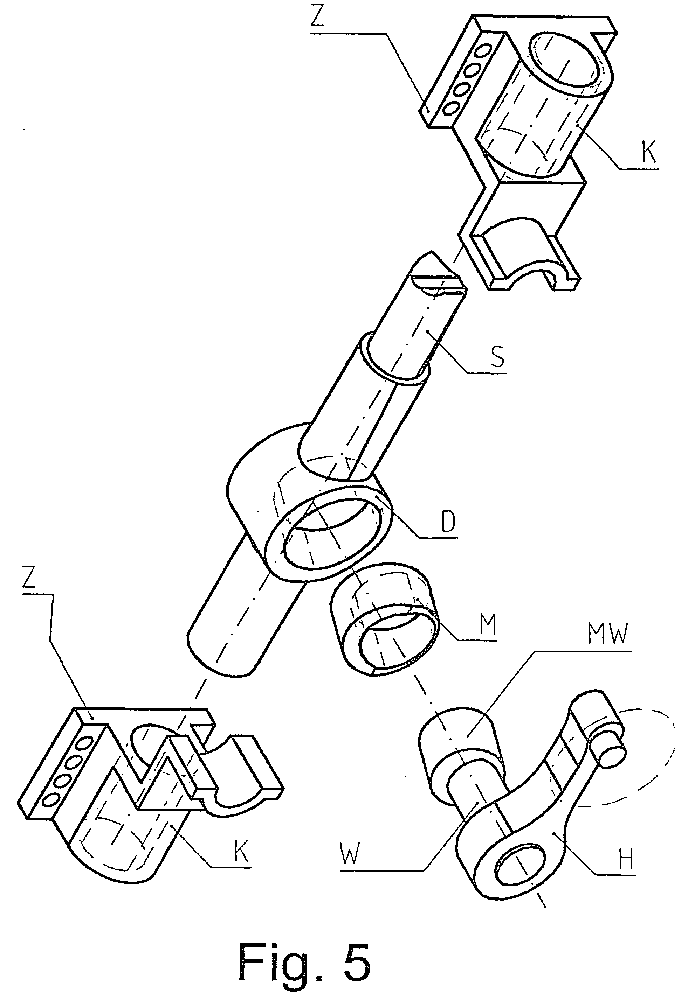

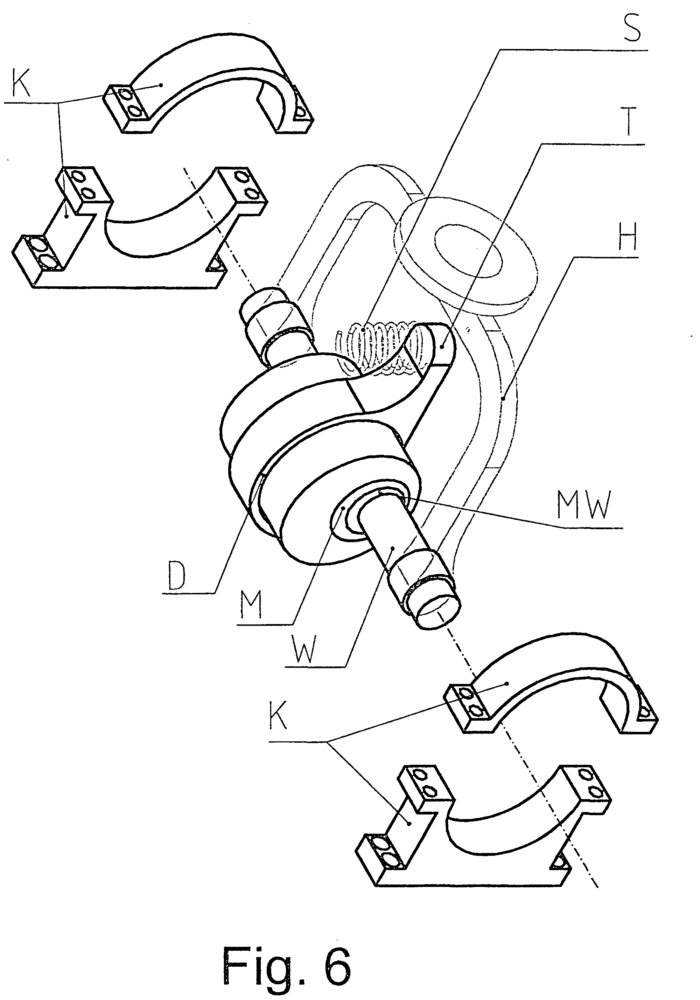

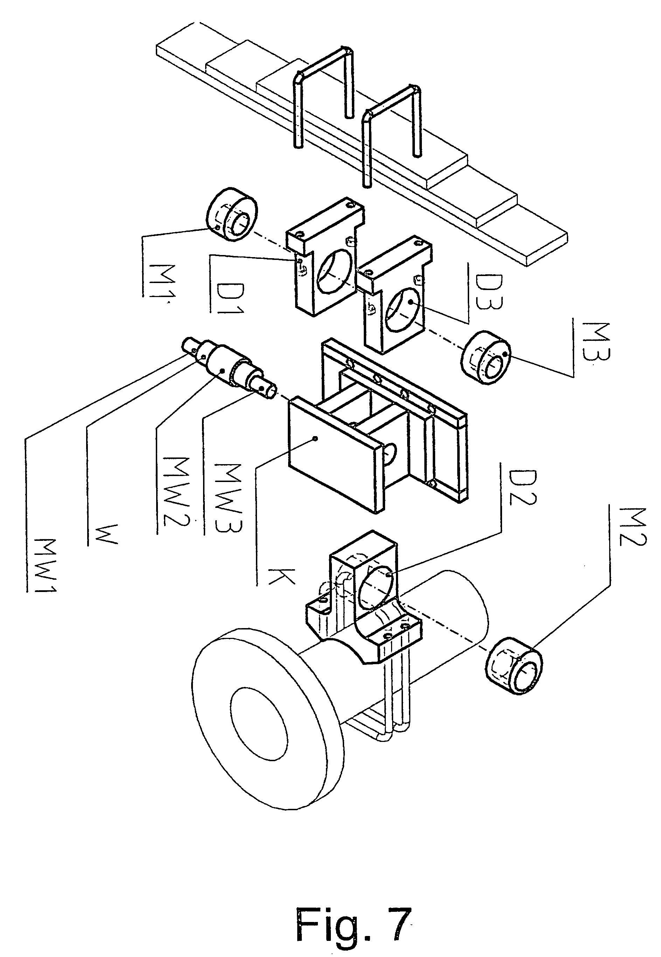

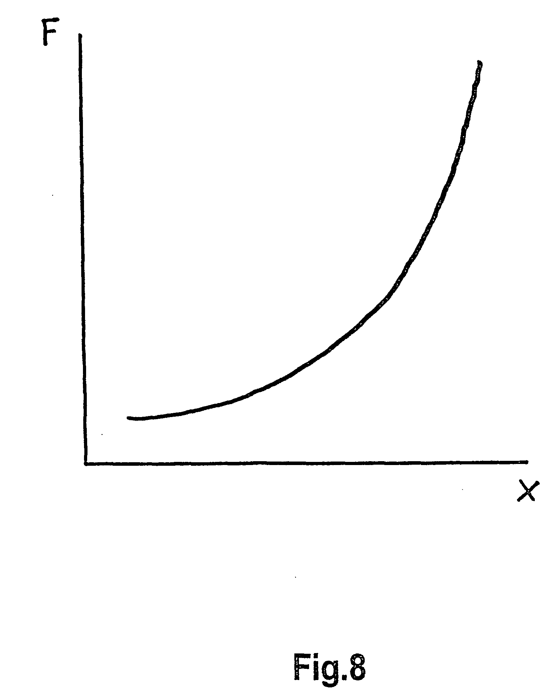

Fig. 4 shows a vehicle suspension system equipped with a U-shaped torsion bar coupling two suspension mechanisms with the help of their intermediate eccentrics; Fig. 5 shows a vehicle suspension system in which the axes of rotation and the axes of symmetry of all the suspension mechanism links intersect at a precisely one point P; Fig. 6 shows a vehicle suspension system of the Mc Pherson type; Fig. 7 shows a vehicle suspension system equipped with a leaf spring; Fig. 8 provides an example of a suspension answer force F as a function of a vehicle wheel flex x.

### Example 1

The suspension unit comprises a shaft (W) fitted with an eccentric bore chamber (MW). In the eccentric bore chamber (MW) of the shaft (W) pivots a pivot (C) of an intermediate eccentric (M), the other end of which pivots inside of the eccentric bore chamber of a disc (D). The shaft (W) and the disc (D) pivot directly in a body (K). An arm (H) is fastened to the pivot of the shaft (W). One end of a torsion bar (S) is coupled rigidly with the disc (D), and the other one is anchored in a vehicle frame. The entire suspension unit is fastened to the vehicle frame with the help of a flange (Z) at the body (K).

In this arrangement, the axis OW of rotation of the shaft (W) relative to the body (K), the axis OD of rotation of the disc (D) relative to the body (K), the symmetry axis OC of the eccentric (MW) at the shaft (W) and the overlapping axis of rotation of the shaft (W) relative to the intermediate eccentric (M), and the symmetry axis OM of the intermediate eccentric (M), and the overlapping axis of rotation of the intermediate eccentric (M) relative to the disc (D) are all parallel to each other.

Owing to said arrangement, the suspension features a strongly progressive characteristic, much better than that of the hydro-pneumatic ones. Its characteristic is differentiable in contradistinction to other progressive suspensions of jump characteristic fitted with a few in turns actuating steel springs.

The suspension gives the possibility to choose freely the suspension characteristics, including its progressiveness, through the selection of geometric parameters of its mechanism, what is an additional advantage over hydro-pneumatic suspension whose characteristic is determined by the gas being used. The suspension features a combination of small deformations of the spring with large wheel flex, which lengthens spring's life.

### Example 2

The suspension unit comprises a shaft (W) fitted with an eccentric (MW), said eccentric (MW) being pivoted in an eccentric bore chamber of an intermediate eccentric (M), whereas the eccentric (M) pivots inside of an eccentric bore chamber of a disc (D). The shaft and the disc pivot in a body (K).

A torsion bar (S) is fastened to the shaft (W), and an arm (H) is coupled with the disc (D). The whole suspension unit is fixed to a vehicle frame with the help of a flange (Z) at the body (K).

In this arrangement, the axis OW of rotation of the shaft (W) relative to the body (K), the axis OD of rotation of the disc (D) relative to the body (K), the symmetry axis OC of the eccentric (MW) at the shaft (W) and the overlapping axis of rotation of the shaft (W) relative to the intermediate eccentric (M), and the symmetry axis OM of the intermediate eccentric (M) and the overlapping axis of rotation of the intermediate eccentric (M) relative to the disc (D) are all parallel to each other.

The suspension features a very strongly progressive characteristic, since to a relatively small vehicle wheel flex there corespondes a relatively large angle of rotation of the shaft (W), and hence a large torsion of the torsion bar, in contradistinction to the suspension described in Example 1. During overhauls, the suspension may be assembled in existing vehicles, e.g. in tanks.

### Example 3

The suspension system comprises a shaft (W) fitted with an eccentric (MW), wherein the eccentric (MW) pivots in an eccentric bore chamber of an intermediate eccentric (M), and the eccentric (M) pivots inside of an eccentric bore chamber of the disc (D). The disc (D) pivots directly in a body (K) and the body (K) is coupled rotationally with the main pivot of the shaft (W). An arm (H) is fastened to a pivot (C) of the intermediate eccentric (M). The body (K) is fitted with a bracket (WS) on which the coil spring (S) is being supported, the other end of which rests on a vehicle frame. The whole suspension unit is fastened to a vehicle body with the help of a flange (Z) at the shaft (W).

In this arrangement the axis OW of rotation of the shaft (W) relative to the body (K), the axis OD of rotation of the disc (D) relative to the body (K), the symmetry axis OC of the eccentric (MW) at the shaft (W) and the overlapping axis of rotation of the shaft (W) relative to the intermediate eccentric (M), and the symmetry axis OM of the intermediate eccentric (M) and the overlapping axis of rotation of the intermediate eccentric (M) relative to the disc (D) must be parallel to each other.

The described suspension mounting to the vehicle frame makes it easier to use a coil spring, which is the most widespread kind of steel spring. The suspension may be assembled in existing vehicles, e.g. in tanks, during overhauls.

### Example 4

An arrangement described in this example is a compound suspension system for two wheels on common axle. It comprises two four-link mechanisms and a spring in the form of U-shaped torsion bar, which works simultaneously as a stabilizer. The torsion bar is coupled rotationally with a vehicle frame through clamping rings (O) at the base of the letter U.

The suspension mechanism, as its four links, comprises a shaft (W) fitted with an eccentric (MW) which is coupled rotationally with an intermediate eccentric (M) which, in turn, is coupled rotationally with a disc (D). The shaft (W) and the disc (D) pivot directly in a body (K). The body (K) of each mechanism is fastened to a vehicle frame, the shaft (W) is coupled rigidly with an arm (H), and the intermediate eccentric (M) is coupled with one end of the U-shaped torsion bar the other end of which is fastened to the intermediate eccentric of the analogous mechanism of the other wheel suspension. In both mechanisms, the axis OW of rotation of the shaft (W) relative to the body (K), the axis OD of rotation of the disc (D) relative to the body (K), the symmetry axis OC of the eccentric (MW) at the shaft (W) and the overlapping axis of rotation of the intermediate eccentric (M) relative to the shaft (W), and the symmetry axis OM of the intermediate eccentric (M) and the overlapping axis of rotation of the intermediate eccentric (M) relative to the disc (D) are all parallel to each other.

Owing to the application of an U-shaped torsion bar both ends of which are coupled with elements of the suspension mechanisms executing both the rotary and the planetary motion, the bar is subject to complex stresses depending on the wheels position. In the case of identical flex of both the wheels, the arms of the U-shaped torsion bar are being twisted and simultaneously slightly expanded.. In the case of various flexes of the wheels, the part of the torsion bar constituting the base of the letter (U) additionally is being twisted. Thus, the torsion bar plays the role of both the main spring for two wheels and the stabilizer.

The suspension, similarly to those described above, features a strongly non-linear characteristic, also for the stabilizer.

### Example 5

The suspension system comprises a shaft (W) fitted with an eccentric (MW), whereas the eccentric (MW) pivots inside of an eccentric bore chamber of an intermediate eccentric (M), which in turn pivots inside of an eccentric bore chamber of a disc (D). The shaft (W) and the disc (D) pivot directly in a body (K). An arm (H) is fastened to the shaft (W).
A torsion bar (S) is coupled with the disc (D), and the whole suspension unit is fixed to a vehicle frame with the help of a flange (Z) at the shaft (W).

The axes of rotation of all the kinematic pairs of the mechanism of this unit suspension intersect at a precisely one point P. In particular, the axis of rotation of the shaft (W) and the axis of rotation of the disc (D) (the latter overlapping the symmetry axis of the torsion bar) intersect at an angle A.

This arrangement gives the possibility to choose freely the angle A within the range of 0-90°, which gives the possibility of a position of the spring relative to the wheel to be conveniently chosen. In particular, in the case the angle A equals 90°, one obtains a suspension with a trailing arm and a longitudinal torsion bar.

The suspension features a strongly non-linear characteristic, which can be freely shaped through an appropriate choice of the geometric parameters of its mechanism.

### Example 6

The Mc Pherson-type suspension system comprises a shaft (W) fitted with an eccentric (MW), an intermediate eccentric (M), a disc (D), and a body (K). The shaft (W) and the disc (D) pivot directly in the body (K), while the intermediate eccentric pivots on the shaft eccentric (MW). A radius arm (H) is fastened to the shaft (W), and a bracket (T) supporting a coil spring (S) is fastened to the disc (D).

The axes of rotation of all the kinematic pairs of the suspension mechanism are parallel to each other.

The suspension has a non-linear progressive characteristic and compact structure, typical for suspensions of the McPherson type.

### Example 7

A suspension system fitted with a leaf spring has a shaft (W) fitted with three eccentrics (MW1, MW2, MW3), three intermediate eccentrics (M1, M2, M3), and three sliders (D1, D2, D3), whereas the slider set (D1, D2, D3) and the intermediate eccentrics (M1, M2, M3) mate the shaft eccentrics (MW1, MW2, MW3) respectively. The shaft (W) pivots in a body (K), and the sliders (D1, D2, D3) are sliding fitted in the body (K). The central slider (D2) is coupled with a vehicle axis, and the leaf spring is fastened to the outer sliders (D1) and (D3). Eccentricity ratios of the eccentrics (MW1) and (MW3) are equal one to the other.
Moreover, the eccentricity ratio of each shaft eccentric (MW1, MW2, MW3) equals the eccentricity ratio of the intermediate eccentric (M1, M2, M3) which it mate.

The shaft eccentrics (MW1) and (MW3) are both rotated by certain angle A relative to the shaft eccentric (MW2). The proper choice of the angle A provides a non-linear characteristic of the suspension of the required progressiveness ratio.
The suspension maintains an important advantage of the leaf spring i.e. its capability to hold alone the vehicle axle.

A common distinctive feature of all the suspension systems described above is a non-linear and differentiable characteristic which provides an extraordinary adaptability of the suspension stiffness to variable static and dynamic loads, thus providing a smooth and stable ride within the whole range of the vehicle loads.

## Claims

1. A vehicle suspension system comprising a spring (S) and at least one flat or spatial four-link mechanism (K, M, W, D), at least three kinematic pairs of which are rotational ones, wherein one of the links of said mechanism is coupled with a vehicle wheel, another of said links is coupled with the spring (S), and the whole mechanism is fastened to a vehicle frame through yet another link of said mechanism, to obtain non-linear dependence of deformation of the spring on the vehicle wheel flex, **characterized in that**, three of said links are made in the form of an eccentric, whereby said four-link mechanism (K, M, W, D) comprises a shaft (W) fitted with an eccentric (MW), the latter being coupled rotationally with an intermediate eccentric (M), the latter being coupled rotationally with a disc (D), wherein the shaft (W) and the disc (D) pivot directly in a body (K).

2. A vehicle suspension system according to claim 1, **characterized in that** the axes of rotation of all the kinematic pairs of said suspension mechanism are parallel to each other.

3. A vehicle suspension system according to claim 1, **characterized in that** the axes of rotation of all the kinematic pairs of said suspension mechanism intersect at a precisely one point P, to obtain a required position of the spring relative to the vehicle wheel.

4. A vehicle suspension system according to claim 2 or claim 3, **characterized by** said body (K) being fastened to a vehicle frame, and said shaft (W) being coupled rigidly with a wheel arm, and wherein the disc (D) is coupled with one end of the spring (S) the other end of which is fixed to the body (K) or directly to the vehicle frame.

5. A vehicle suspension system according to claim 2 or claim 3, **characterized by** said body (K) being fastened to a vehicle frame, and said disc (D) being coupled rigidly with a wheel arm, and said shaft (W) being coupled with one end of a spring (S) the other end of which is fixed to the body (K) or directly to the vehicle frame.

6. A vehicle suspension system according to claim 2 or claim 3, **characterized by** said shaft (W) being fastened to a vehicle frame through the flange (Z), said intermediate eccentric (M) being coupled rigidly with a vehicle wheel arm (H), and said body (K) being coupled rigidly with one end of a spring (S) the other end of which is fixed to the shaft (W) or directly to the vehicle frame.

7. A vehicle suspension system according to claim 2 or claim 3, **characterized by** said body (K) being fastened to a vehicle frame, said shaft (W) being coupled rigidly with a vehicle wheel arm, and the intermediate eccentric (M) being coupled with one end of an U-shaped torsion bar the other end of which is fixed to the intermediate eccentric of an analogous mechanism of a suspension of the other wheel.

8. A vehicle suspension system comprising a spring (S) and a least one flat or spatial four-link-mechanism (K, M, W, D), three kinematic pairs of which are rotational ones and one of the links being made in the form of a slider such that the fourth kinematic pair is a sliding one, wherein one of the links of said mechanism is coupled with a vehicle wheel, another of said links is coupled with the spring (S), and the whole mechanism is fastened to a vehicle frame through yet another link of said mechanism, to obtain non-linear dependence of deformation of the spring on the vehicle wheel flex, **characterized in that**, two of said links are made in the form of an eccentric, whereby said four-link mechanism comprises a shaft (W) fitted with an eccentric (MW), the latter being coupled rotationally with an intermediate eccentric (M), the latter being coupled rotationally with a slider (D), wherein the shaft (W) pivots directly in a body (K) and the slider is slidingly fitted in the body (K).

9. A vehicle suspension system according to claim 8, **characterized by** a shaft (W) fitted with three eccentrics (MW1), (MW2) and (MW3), the latter being coupled rotationally with corresponding intermediate eccentrics (M1), (M2), and (M3), the latter being coupled rotationally with corresponding sliders (D1), (D2) and (D3), wherein the sliders (D1), (D2) and (D3) are slidingly fitted in the body (K), said body (K) being fastened to a vehicle frame, the slider (D2) being coupled with a vehicle axle and the sliders (D1) and (D2) being coupled with a spring, which, in turn, is fastened to the vehicle frame.

## Patentansprüche

1. Fahrzeug-Aufhängungssystem, das eine Feder (5) und wenigstens einen ebenen oder räumlichen viergliedrigen Mechanismus (K, M, W, D) umfasst, wobei wenigstens drei kinematische Paare desselben rotierende sind und eines der Glieder des Mechanismus mit einem Fahrzeugrad gekoppelt ist, ein anderes der Glieder mit der Feder (S) gekoppelt ist und der gesamte Mechanismus über ein weiteres Glied des Mechanismus an einem Fahrzeugrahmen angebracht ist, um eine nichtlineare Abhängigkeit der Verformung der Feder von der Fahrzeugrad-Durchbiegung zu erreichen, **dadurch gekennzeichnet, dass** drei der Glieder in Form eines Exzenters ausgeführt sind, so dass der viergliedrige Mechanismus (K, M, W, D) eine Welle (W) umfasst, die mit einem Exzenter (MW) versehen ist, wobei letzterer rotierend mit einem Zwischen-Exzenter (M) gekoppelt ist, der rotierend mit einer Scheibe (D) gekoppelt ist, und die Welle (W) sowie die Scheibe (D) direkt in einem Körper (K) geschwenkt werden.

2. Fahrzeug-Aufhängungssystem nach Anspruch 1, **dadurch gekennzeichnet, dass** die Drehachsen aller kinematischen Paare des Aufhängungsmechanismus parallel zueinander sind.

3. Fahrzeug-Aufhängungssystem nach Anspruch 1, **dadurch gekennzeichnet, dass** die Drehachsen aller kinematischen Paare des Aufhängungsmechanismus einander an genau einem Punkt P schneiden, um eine erforderliche Position der Feder relativ zu dem Fahrzeugrad zu erreichen.

4. Fahrzeug-Aufhängungssystem nach Anspruch 2 oder Anspruch 3, **dadurch gekennzeichnet, dass** der Körper (K) an einem Fahrzeugrahmen angebracht ist und die Welle (W) starr mit einem Radarm gekoppelt ist, und wobei die Scheibe (D) mit einem Ende der Feder (S) gekoppelt ist, deren anderes Ende an dem Körper (K) oder direkt an dem Fahrzeugrahmen befestigt ist.

5. Fahrzeug-Aufhängungssystem nach Anspruch 2 oder 3, **dadurch gekennzeichnet, dass** der Körper (K) an einem Fahrzeugrahmen angebracht ist und die Scheibe (D) starr mit einem Radarm gekoppelt ist und die Welle (W) mit einem Ende einer Feder (S) gekoppelt ist, deren anderes Ende an dem Körper (K) oder direkt an dem Fahrzeugrahmen befestigt ist.

6. Fahrzeug-Aufhängungssystem nach Anspruch 2 oder Anspruch 3, **dadurch gekennzeichnet, dass** die Welle (W) an einem Fahrzeugrahmen über den Flansch (Z) angebracht ist, der Zwischen-Exzenter (M() starr mit einem Fahrzeug-Radarm (H) gekoppelt ist und der Körper (K) starr mit einem Ende einer Feder (S) gekoppelt ist, deren anderes Ende an der Welle (W) oder direkt an dem Fahrzeugrahmen befestigt ist.

7. Fahrzeug-Aufhängungssystem nach Anspruch 2 oder Anspruch 3, **dadurch gekennzeichnet, dass** der Körper (K) an einem Fahrzeugrahmen angebracht ist, die Welle (W) starr mit einem Fahrzeug-Radarm gekoppelt ist und der Zwischen-Exzenter (M) mit einem Ende eines U-förmigen Drehstabes verbunden ist, dessen anderes Ende an dem Zwischen-Exzenter eines analogen Mechanismus einer Aufhängung des anderen Rades befestigt ist.

8. Fahrzeug-Aufhängungssystem, das eine Feder (S) und wenigstens einen ebenen oder räumlichen viergliedrigen Mechanismus (K, M, W, D) umfasst, wobei drei kinematische Paare desselben rotierende sind und eines der Glieder in Form eines Gleitelementes ausgeführt ist, so dass das vierte kinematische Paar gleitend ist, und wobei eines der Glieder des Mechanismus mit einem Fahrzeugrad gekoppelt ist, ein anderes der Glieder mit der Feder (S) gekoppelt ist und der gesamte Mechanismus über ein weiteres Glied des Mechanismus an einem Fahrzeugrahmen angebracht ist, um eine nichtlineare Abhängigkeit der Verformung der Feder von der Fahrzeugrad-Durchbiegung zu erreichen, **dadurch gekennzeichnet, dass** zwei der Glieder in Form eines Exzenters ausgeführt sind, so dass der viergliedrige Mechanismus eine Welle (W) umfasst, die mit einem Exzenter (MW) versehen ist, wobei letzterer rotierend mit einem Zwischen-Exzenter (M) gekoppelt ist, der mit einem Gleitelement (D) gekoppelt ist, und die Welle (W) direkt in einem Körper (K) geschwenkt wird und das Gleitelement gleitend in den Körper (K) eingepasst ist.

9. Fahrzeug-Aufhängungssystem nach Anspruch 8, **gekennzeichnet durch** eine Welle (W), die mit drei Exzentern (MW1), (MW2) und (MW3) versehen ist, wobei letztere rotierend mit entsprechenden Zwischen-Exzentern (M1), (M2) und (M3) gekoppelt sind, die rotierend mit entsprechenden Gleitelementen (D1), (D2) und (D3) gekoppelt sind, die Gleitelemente (D1), (D2) und (D3) gleitend in den Körper (K) eingepasst sind und der Körper (K) an einem Fahrzeugrahmen angebracht ist, das Gleitelement (D2) mit einer Fahrzeugachse gekoppelt ist und die Gleitelemente (D1) und (D2) mit einer Feder gekoppelt sind, die ihrerseits an dem Fahrzeugrahmen angebracht ist.

## Revendications

1. Système de suspension de véhicule comprenant un ressort (S) et au moins un mécanisme à quatre articulations planes ou spatiales (K, M, W, D), dont au moins trois paires cinématiques sont rotationnelles, dans lequel une première des articulations dudit mécanisme est reliée à une roue de véhicule, une autre desdites articulations est reliée au ressort (S), et le mécanisme dans sa totalité est fixé sur un châssis de véhicule par l'intermédiaire d'encore une autre articulation dudit mécanisme, pour obtenir une dépendance de déformation non-linéaire du ressort vis-à-vis de la flexion de roue de véhicule, **caractérisé en ce que** trois desdites articulations sont réalisées sous la forme d'un excentrique, de sorte que ledit mécanisme à quatre articulations (K, M, W, D) comprenne un arbre (W) muni d'un excentrique (MW), ce dernier étant relié en rotation à un excentrique intermédiaire (M), ce dernier étant relié en rotation à un disque (D), l'arbre (W) et le disque (D) pivotant directement dans un corps (K).

2. Système de suspension de véhicule selon la revendication 1, **caractérisé en ce que** les axes de rotation de toutes les paires cinématiques dudit mécanisme de suspension sont parallèles les uns aux autres.

3. Système de suspension de véhicule selon la revendication 1, **caractérisé en ce que** les axes de rotation de toutes les paires cinématiques dudit mécanisme de suspension se recoupent de manière précise en un point P, pour obtenir une position requise du ressort par rapport à la roue de véhicule.

4. Système de suspension de véhicule selon la revendication 2 ou 3, **caractérisé en ce que** ledit corps (K) est fixé sur un châssis de véhicule, et ledit arbre (W) est relié rigidement à un bras de roue, et dans lequel ledit disque (D) est relié à une première extrémité du ressort (S) dont l'autre extrémité est fixée sur le corps (K) ou directement sur le châssis de véhicule.

5. Système de suspension de véhicule selon la revendication 2 ou 3, **caractérisé en ce que** ledit corps (K) est fixé sur un châssis de véhicule, et ledit disque (D) est relié rigidement à un bras de roue, et ledit arbre (W) est relié à une première extrémité d'un ressort (S) dont l'autre extrémité est fixée au corps (K) ou directement sur le châssis de véhicule.

6. Système de suspension de véhicule selon la revendication 2 ou 3, **caractérisé en ce que** ledit arbre (W) est fixé sur un châssis de véhicule par l'intermédiaire de la bride (Z), ledit excentrique intermédiaire (M) étant relié rigidement à un bras de roue de véhicule (H), et ledit corps (K) étant relié rigidement à une première extrémité d'un ressort (S) dont l'autre extrémité est fixée sur l'arbre (W) ou directement sur le châssis de véhicule.

7. Système de suspension de véhicule selon la revendication 2 ou 3, **caractérisé en ce que** ledit corps (K) est fixé sur un châssis de véhicule, ledit arbre (W) étant relié rigidement à un bras de roue de véhicule, et l'excentrique intermédiaire (M) étant relié à une première extrémité d'une barre de torsion en forme de U dont l'autre extrémité est fixée sur l'excentrique intermédiaire d'un mécanisme analogue d'une suspension de l'autre roue.

8. Système de suspension de véhicule comprenant un ressort (S) et au moins un mécanisme à quatre articulations planes ou spatiales (K, M, W, D), dont trois paires cinématiques sont des paires rotationnelles et une première des articulations est réalisée sous la forme d'un coulisseau de telle sorte que la quatrième paire cinématique est une paire coulissante, dans lequel une première des articulations dudit mécanisme est reliée à une roue de véhicule, une autre desdites articulations est reliée au ressort (S), et le mécanisme dans sa totalité est fixé sur un châssis de véhicule par l'intermédiaire d'encore une autre articulation dudit mécanisme pour obtenir une dépendance de déformation non-linéaire du ressort vis-à-vis de la flexion de roue de véhicule, **caractérisé en ce que** deux desdites articulations sont réalisées sous la forme d'un excentrique, de sorte que ledit mécanisme à quatre articulations comprenne un arbre (W) muni d'un excentrique (MW), ce dernier étant relié en rotation à un excentrique intermédiaire (M), ce dernier étant relié en rotation à un coulisseau (D), l'arbre (W) pivotant directement dans un corps (K) et le coulisseau étant adapté de manière coulissante dans le corps (K).

9. Système de suspension de véhicule selon la revendication 8, **caractérisé par** un arbre (W) muni de trois excentriques (MW1), (MW2) et (MW3), ce dernier étant relié en rotation à des excentriques intermédiaires correspondants (M1), (M2) et (M3), ces derniers étant reliés en rotation à des coulisseaux correspondants (D1), (D2) et (D3), dans lequel les coulisseaux (D1), (D2) et (D3) sont adaptés de manière coulissante dans le corps (K), ledit corps (K) étant fixé sur un châssis de véhicule, le coulisseau (D2) étant relié à un essieu de véhicule et les coulisseaux (D1) et (D2) étant reliés à un ressort qui, à son tour, est fixé sur le châssis de véhicule.
